# DEMANDE DE BREVET EUROPEEN

(11) **EP 1 600 654 A1**
(43) Date de publication de la demande: **30.11.2005**
(21) Numéro de dépôt: 05011091.5
(22) Date de dépôt: 23.05.2005
(51) Int. Cl.: F16D 65/097, F16D 55/00

(54) **Cale de protection pour piston de frein à disque.**

(30) Priorité: 27.05.2004 FR 0405755
(71) Demandeur: ROBERT BOSCH GMBH, 70442 Stuttgart (DE)
(72) Inventeur: Fillon, Alain, 17220 Croix Chapeau (FR); Picot, Pascal, 77170 Brie Comte Robert (FR)
(74) Mandataire: Hurwic, Aleksander Wiktor

(57) **Abrégé**

L'invention a pour objet une protection apte à obturer une cavité (201) d'un piston (200) de frein à disque La protection couvre entre 45 et 70 % d'une ouverture de la cavité. La protection, solidaire du piston, vient au contact de la plaquette de frein. La protection comporte une plaque (301) en forme de demi-disque, un rayon du demi-disque étant supérieur à un rayon de la cavité. Des moyens de maintien (302) maintiennent la protection sur le piston. La protection est munie de moyens d'indexation (303).

## Description

L'invention a pour objet une protection pour un piston de frein à disque pour véhicule automobile. Plus particulièrement l'invention a pour objet une protection pour un piston comportant une cavité interne, fermée à une première extrémité par une paroi transversale par rapport à un axe du piston, et ouverte à une autre extrémité. La protection de l'invention est apte à obturer une ouverture de la cavité. L'invention a aussi pour objet un frein à disque pour véhicule automobile muni d'un piston et d'une protection de l'invention.

Les systèmes de freinage de véhicules automobiles actuels sont généralement munis de freins à disque ou de freins à tambour. La présente invention se rapporte aux freins à disque.

Un frein à disque comporte un étrier de frein à disque. L'étrier de frein à disque est solidaire d'un châssis du véhicule par l'intermédiaire d'une chape qui, elle, est fixée au châssis du véhicule par l'intermédiaire d'un porte fusée. Un corps de l'étrier comporte un alésage, ou cylindre hydraulique, dans lequel un piston de frein est monté coulissant. Un espace est ménagé entre le piston et un nez de l'étrier. Dans cet espace sont montées deux plaquettes, respectivement interne et externe. La plaquette externe est située coté nez de l'étrier, tandis que la plaquette interne est située coté piston de frein. Un disque de frein à disque est également logé dans cet espace. Le disque est encadré par les plaquettes. Le disque est monté en rotation sur une roue du véhicule. C'est à dire que le disque tourne en même temps que la roue du véhicule. Les plaquettes sont montées sur un support de plaquette par l'intermédiaire de ressorts.

Une chambre hydraulique, remplie de liquide hydraulique, et à volume variable, est située entre un fond du cylindre hydraulique et le piston. Lors d'un freinage du liquide hydraulique arrive sous pression dans la chambre hydraulique. Une augmentation du volume hydraulique entraîne une augmentation d'une pression hydraulique dans la chambre. La pression hydraulique agit sur le piston à l'endroit de son extrémité arrière, permettant de pousser le piston en direction des plaquettes.

Le piston vient alors au contact de la plaquette interne. La plaquette interne est ainsi déplacée puis accolée sur le disque. Dans le cas d'un étrier flottant, l'action du disque sur la plaquette interne entraîne un déplacement de l'étrier qui amène la plaquette externe en contact du disque. Les deux plaquettes étant montées fixes en rotation, la force de frottement s'exerçant sur le disque en rotation vient s'opposer à la rotation du disque et donc de la roue.

Lors d'un freinage, les plaquettes sont à l'origine de bruits pouvant gêner un utilisateur du véhicule. En effet, la plaquette lorsqu'elle est accolée au disque est soumise à un déplacement tangentiel suivant le sens de rotation de la roue. Ce déplacement tangentiel est une des origines des bruits engendrés par la plaquette lors d'un freinage. En effet, la plaquette cogne contre son support de plaquettes, et racle contre la face du disque à laquelle elle est accolée.

Il a été constaté que ces bruits peuvent être partiellement diminués lorsque le piston est appliqué en biais sur la plaquette. Aussi, il est connu de ménager une lumière sur une plaque collée à la plaquette. Cette plaque permet déjà, à elle seule, de réduire les bruits. On ménage par exemple une lumière sur un coté droit de la plaque. Ainsi, lorsque le piston est appliqué sur la plaquette, il vient en appui de biais sur la plaquette, du fait de la dénivellation sur la plaquette entre un point de la plaquette à l'endroit de la plaque et un point de la plaquette à l'endroit de la lumière.

L'utilisation d'une telle plaquette dans un étrier de frein à disque permet de diminuer de façon efficace les bruits lors d'un freinage. Cependant, cette solution peut entraîner une perte de temps lors du montage. En effet, il faut faire coïncider exactement le piston avec la lumière sur la plaquette. Si le piston est décalé, il vient en appui sur la plaquette en dehors de la lumière, et ne vient donc pas en biais. Par ailleurs, il peut arriver que le piston se décale légèrement au cours des utilisations du frein muni dudit piston. Ce décalage ne modifie pas la qualité du freinage, mais peut permettre la réapparition du bruit si le piston se trouve décalé par rapport à la lumière sur la plaquette.

On connaît également, comme moyen pour permettre à un piston de frein à disque d'arriver en biais sur la plaquette du frein, une capuche apte à ne couvrir que partiellement le piston à l'endroit d'une zone de contact entre le piston et la plaquette. Les pistons de freins à disque principalement concernés par cette solution sont munis d'une cavité interne ouverte à une extrémité axiale avant et fermée à une extrémité axiale arrière. Une ouverture de la cavité est dirigée vers une plaquette interne du frein à disque. Le piston, lorsqu'il n'est pas muni de la protection, est apte à appliquer une plaquette contre un disque de frein à disque avec une surface d'appui circonférentielle correspondant à une paroi bordant l'ouverture de la cavité. La protection permet de couvrir de façon partielle la cavité dudit piston. La protection s'étend perpendiculairement à l'axe du piston. La protection comporte une plaque, apte à venir au contact de la plaquette interne, et des moyens d'accrochage de la protection au piston, afin de solidariser ladite protection au piston.

Une telle solution donne de bons résultats lorsqu'une position de la protection sur le piston est indifférente. Cependant, la position de la protection sur le piston permet dans bien des cas d'atténuer plus ou moins bien les bruits de freinage. Par ailleurs, d'un frein à un autre, la position idéale de la protection, c'est à dire la position pour laquelle les bruits sont le mieux atténués, peut varier. Or, la protection selon l'état de la technique peut avoir une multitude de positions sur la protection.

Par exemple, la protection est montée sur une partie haute de l'extrémité ouverte du piston. Par partie haute de l'extrémité ouverte du piston, on entend partie vue en haut par un observateur, celui-ci étant placé dans l'axe du piston, et regardant l'extrémité ouverte dudit piston. A l'inverse, il est possible de fixer la protection sur une partie basse de l'extrémité ouverte du piston. Par partie basse de l'extrémité ouverte du piston, on entend partie vue en bas par l'observateur, celui-ci étant placé dans l'axe du piston, et regardant l'extrémité ouverte du piston. Il est également possible de monter la protection sur une partie avant ou arrière de l'extrémité ouverte du piston. Par partie avant de l'extrémité ouverte du piston, on entend partie vue à droite par un observateur, celui-ci étant placé dans l'axe du piston, et regardant l'extrémité ouverte dudit piston. Par partie arrière de l'extrémité ouverte du piston, on entend partie vue à gauche par un observateur, celui-ci étant placé dans l'axe du piston, et regardant l'extrémité ouverte dudit piston.

Ainsi, selon le frein sur lequel il faut monter la protection, il est nécessaire de penser à positionner de façon particulière ladite protection. Il est également nécessaire de vérifier tout le long du montage du piston dans l'étrier de frein à disque associé, si la position souhaitée est bien maintenue. Il s'ensuit une perte de temps importante, tendant à augmenter un coût de fabrication d'un tel piston.

Dans l'invention, on cherche à résoudre les problèmes exposés ci-dessus en fournissant un moyen pour atténuer les bruits de freinage dont un positionnement sur le piston peut varier selon les besoins, mais dont un temps de montage sur ledit piston est simple et rapide.

L'invention a donc pour but de faciliter un montage d'une protection dans une position souhaitée sur un piston de frein à disque.

Pour cela, l'invention propose de munir la protection de moyens d'indexation. Afin de faciliter la mise en place de la protection selon les besoins sur la partie haute ou basse, ou avant ou arrière du piston, on munit la protection de moyens permettant d'indexer une position de la protection sur le piston.

Par exemple, la protection est munie d'un doigt s'étendant radialement sur la protection, c'est à dire que le doigt s'étend parallèlement à un plan de la protection, depuis un périmètre externe de la protection vers le corps de l'étrier dans lequel le piston est monté. Le doigt peut venir en butée sur le corps de l'étrier. Par exemple, dans le cas où la protection doit obturer la partie haute, la partie gauche ou la partie droite de la cavité du piston, le doigt coopère avec une lumière pratiquée en haut, à gauche ou à droite dans la voûte de l'étrier de frein à disque dans lequel le piston muni de ladite protection est monté.

Plus généralement, on peut prévoir de ménager une fente ou un décrochement dans le corps de l'étrier, à l'endroit correspondant sur le piston à la partie haute ou basse ou avant ou arrière du piston. Le doigt vient en butée dans cette fente ou ce décrochement. Seule l'orientation de la protection sur le piston, permettant au doigt d'être logé dans cette fente ou ce décrochement permet de maintenir le piston, muni de la protection, dans l'alésage de l'étrier. Ainsi, on évite tout mauvais positionnement de la protection sur le piston.

Par ailleurs, ces moyens d'indexation permettent d'éviter une rotation de la protection par rapport à sa position initiale au cours des utilisations du frein à disque muni de ce piston.

Le piston muni d'une telle protection de l'invention arrive dans tous les cas en biais sur la plaquette. Un effet, il existe une dénivellation entre la surface d'appui du piston sur la plaquette à l'endroit de la protection et la surface d'appui du piston sur la plaquette à l'endroit du piston dépourvu de la protection.

On peut prévoir que la protection couvre entre 45% et 70% de l'ouverture de la cavité. Dans un exemple particulier de réalisation de l'invention, la protection couvre 50% de l'ouverture de la cavité. Pour cela, la protection a par exemple une forme de demi-disque. Un rayon de ce demi-disque est supérieur à un rayon de la cavité du piston de frein à disque, de manière à ce que la protection puisse être maintenue sur le piston malgré la présence de la cavité.

Afin de maintenir la protection sur le piston, on munit ladite protection de moyens d'accrochage sur le piston. Par exemple, les moyens d'accrochage comportent au moins deux pattes s'étendant sensiblement perpendiculaires au plan de la protection. Dans un exemple de réalisation particulier de l'invention, les pattes peuvent faire partie intégrante de la protection, c'est-à-dire être formées sur la protection, et être recourbées de manière à pouvoir se clipser dans la cavité du piston. Il est également possible d'ajouter les pattes ultérieurement sur la protection. Par exemple, les pattes sont fixées à la protection, sur un périmètre externe de la protection, par collage ou par soudure.

D'une manière générale les moyens d'accrochage de la protection sur le piston sont tels qu'ils peuvent coopérer avec une paroi interne de la cavité. Par exemple, les pattes peuvent être munies de crochets à l'endroit d'une extrémité des pattes logée dans la cavité. La paroi interne de la cavité peut alors être munie de fentes. Une disposition et une dimension des fentes sont telles que les crochets des pattes peuvent être logés dans ces fentes, de manière à maintenir la protection sur le piston.

Dans un exemple particulier de réalisation de l'invention, et afin d'augmenter les amortissements du bruit, il est possible d'utiliser une protection formée de plusieurs couches successives, dont une au moins permet d'augmenter le frottement. Par exemple, une partie centrale de la protection peut être réalisée en tôle d'acier inoxydable ou en tôle d'acier galvanisé ou en résine synthétique. La partie centrale est recouverte, au moins sur sa face opposée à la cavité, d'une matière moins dure telle que du caoutchouc ou un élastomère afin d'augmenter les frottements de la protection sur la plaquette. Il est possible que la partie centrale de la protection soit munie sur ses deux faces d'une couche en caoutchouc. Les différentes couches peuvent être solidarisées entre elles et à la partie centrale par exemple par collage.

L'invention a donc pour objet une protection apte à être montée dans une cavité interne d'un piston de frein à disque, de manière à ne couvrir que partiellement une extrémité ouverte du piston, et à former une surface d'appui partielle contre une plaquette de frein, caractérisée en ce qu'elle est munie de moyens d'indexation de ladite protection sur le piston.

La protection selon l'invention peut également comporter tout ou parties des caractéristiques suivantes
- les moyens d'indexation comportent un doigt s'étendant en saillie sur une périphérie radialement externe de la protection, le doigt étant apte à coopérer avec un élément d'un étrier dans lequel ledit piston est monté ;
- la protection obstrue une partie haute, ou basse, ou avant ou arrière de l'extrémité ouverte du piston ;
- la protection couvre entre 45 et 70 % d'une ouverture de la cavité ;
- la protection est constituée d'une plaque en forme de demi-disque, un rayon du demi-disque étant supérieur à un rayon de la cavité ;
- la protection est multicouche, une partie centrale de la protection étant formée par une plaque métallique, la plaque métallique étant recouverte au moins sur une face dirigée vers la plaquette d'une couche en matériau apte à augmenter les frottements ;
- des moyens de maintien de la protection sur le piston sont munis d'au moins deux pattes réparties régulièrement sur un périmètre externe de la protection, les pattes s'étendant sensiblement perpendiculaires à un plan de la protection, les pattes étant aptes à être logées dans la cavité du piston de manière à coopérer avec une paroi interne de la cavité.

L'invention a également pour objet un frein à disque muni d'une protection pour piston de frein.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : Une représentation schématique en coupe transversale d'un frein à disque muni d'un piston de l'invention ;
- Figure 2 : Une représentation en coupe transversale d'un piston de frein à disque selon un exemple de réalisation de l'invention ;
- Figure 3 : Une représentation d'une protection selon un exemple de réalisation de l'invention.

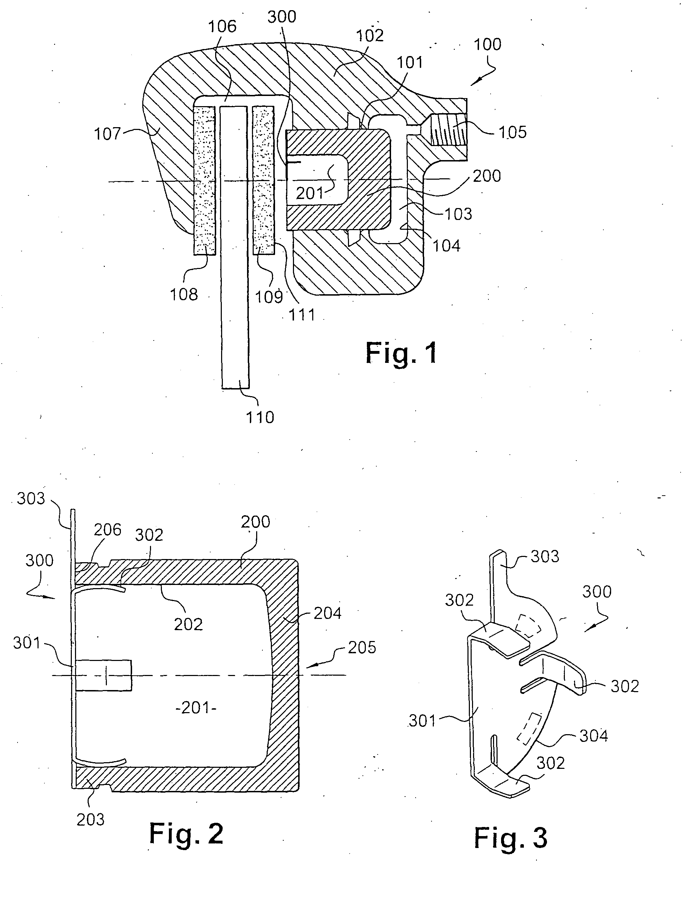

Sur la figure 1 est représenté un étrier 100 de frein à disque. Un alésage 101 cylindrique est ménagé dans un corps 102 de l'étrier 100. Un piston 200 cylindrique est monté coulissant dans l'alésage 101. Une chambre hydraulique 103, à volume variable, est située entre un fond 104 de l'alésage 101 et le piston 200. La chambre hydraulique 103 est alimentée en liquide de frein par un circuit d'alimentation 105.

Un espace 106 est ménagé entre le piston 200 et un nez 107 de l'étirer 100. Une plaquette externe 108 et une plaquette interne 109 sont montées dans cet espace 106. Un disque 110 est monté en rotation sur une roue (non représentée) et est intercalé entre la plaquette externe 108 et la plaquette interne 109. Les plaquettes 108 et 109 sont montées fixes en rotation.

Une extrémité du piston 200, dirigée vers la plaquette interne (109) est munie d'une protection 300 formant une demi-capuche. La protection 300 telle que représentée sur la figure 1 est montée sur une partie haute du piston 200. Des moyens d'indexation (non visibles sur la figure 1) permettent d'assurer le bon positionnement, ici position haute, de la protection 300 sur le piston 200.

Sur la figure 2, on peut voir plus en détail un piston 200 et sa protection 300. Le piston 200 est muni d'une cavité interne 201. La cavité interne 201 est fermée à une extrémité axiale fermée 205 par une paroi transversale 204 et est ouverte à une extrémité axiale ouverte 203. Une ouverture de la cavité 201 est circulaire.

L'extrémité fermée 205 du piston 200 est dirigée vers la chambre hydraulique 103 (figure 1). Une pression hydraulique exercée sur l'extrémité fermée 205 du piston 200 permet un déplacement du piston 200 dans l'alésage 101, en direction des plaquettes 108 et 109. Une paroi 206 bordant l'extrémité ouverte 203 du piston 200 vient alors en contact d'une face interne 111 de la plaquette interne 109. Par face interne 111 de la plaquette 109, on entend face dirigée vers le piston 200.

Le piston est muni de la protection 300 qui obstrue partiellement l'ouverture de la cavité 201. C'est-à-dire que la protection 300 est solidaire d'une partie du piston 200 à l'endroit de son extrémité ouverte 203. Dans l'exemple représenté à la figure 2, la protection 300 obstrue une partie droite de la cavité 201.

Pour assurer un tel positionnement de la protection 300 sur le piston 200, la protection 300 est munie de moyens 303 d'indexation constitués par une languette 303 s'étendant radialement sur un demi-disque 301 formant la protection 300, dans le plan du demi-disque 301. La languette 303 est située sur une partie haute de la protection 300, correspondant à la partie haute du piston 200. Ainsi, la languette 303 peut coopérer avec une lumière ménagée dans la voûte de l'étrier dans lequel le piston 200 est monté. La languette 303 permet de garantir que la protection 300 est bien positionnée à l'origine sur le piston 200.

Afin d'optimiser un temps de montage, on peut prévoir de réaliser les étriers de frein à disque, selon les besoins, avec un logement spécifique pour la languette 303, et tels qu'une seule position de la protection 300 sur le piston 200 est possible.

Par ailleurs, avec la languette 303, une fois mise en place, la protection 300 ne peut pas s'éloigner de sa position initiale, malgré notamment les frottements de ladite protection 300 ..contre la plaquette interne 109.

La protection 300, telle que représentée sur les figures 2 et 3, est maintenue sur le piston 200 par des moyens de maintien 302. Les moyens de maintien 302 sont par exemple formés par des pattes 302 coopérant avec une paroi interne 202 de la cavité 201. Les pattes 302 se clipsent dans la cavité 201.

Sur la figure 3, on peut voir un exemple de réalisation de la protection 300 de l'invention. La protection 300 est formée d'un demi-disque 301 et de trois pattes 302 s'étendant sensiblement perpendiculaires à un plan du demi-disque 301. Les pattes 302 sont réparties régulièrement sur un périmètre externe circulaire 304 du demi-disque 301. Les pattes 302 font partie initialement du demi-disque 301. Les pattes 302 sont recourbées perpendiculairement au plan du demi-disque 301 de manière à pouvoir coopérer avec la paroi interne 202 de la cavité 201 (figure 2). La languette 303 est sensiblement perpendiculaire aux pattes 302 de maintien de la protection 300 sur le piston 200.

## Revendications

1. Protection (300) apte à être montée dans une cavité interne (201) d'un piston (200) de frein à disque, de manière à ne couvrir que partiellement une extrémité ouverte du piston, et à former une surface d'appui partielle contre une plaquette (109) de frein,
**caractérisée en ce qu'**elle est munie de moyens d'indexation (303) de ladite protection sur le piston.

2. Protection selon la revendication 1, **caractérisée en ce que** les moyens d'indexation comportent un doigt (303) s'étendant en saillie sur une périphérie radialement externe de la protection, le doigt étant apte à coopérer avec un élément d'un étrier dans lequel ledit piston est monté.

3. Protection selon l'une des revendications 1 à 2, **caractérisée en ce qu'**elle obstrue une partie haute, ou basse, ou avant ou arrière de l'extrémité ouverte du piston.

4. Protection selon l'une des revendications 1 à 3, **caractérisée en ce qu'**elle couvre entre 45 et 70 % d'une ouverture de la cavité.

5. Protection selon l'une des revendications 1 à 4, **caractérisée en ce qu'**elle est constituée d'une plaque (301) en forme dé demi-disque, un rayon du demi-disque étant supérieur à un rayon de la cavité.

6. Protection selon l'une des revendications 1 à 5, **caractérisée en ce qu'**elle est multicouche, une partie centrale de la protection étant formée par une plaque métallique, la plaque métallique étant recouverte au moins sur une face dirigée vers la plaquette d'une couche en matériau apte à augmenter les frottements.

7. Protection selon l'une des revendications 1 à 6, **caractérisée en ce que** des moyens de maintien de la protection sur le piston sont munis d'au moins deux pattes (302) réparties régulièrement sur un périmètre externe (304) de la protection, les pattes s'étendant sensiblement perpendiculaires à un plan de la protection, les pattes étant aptes à être logées dans la cavité du piston de manière à coopérer avec une paroi interne (202) de la cavité.

8. Frein à disque (100) muni d'une protection (300) pour piston (200) de frein selon l'une des revendications 1 à 7.
